# EUROPÄISCHE PATENTSCHRIFT

(11) **EP 1 808 291 B1**
(45) Veröffentlichungstag und Bekanntmachung des Hinweises auf die Patenterteilung: **04.08.2010**
(21) Anmeldenummer: 07000628.3
(22) Anmeldetag: 12.01.2007
(51) Int. Cl.: B32B 27/18, B65D 65/40, C08K 5/10, C08L 23/10

(54) **Verpackungsmaterial mit einem Antihaftmittel und dessen Verwendung für die Verpackung von Lebensmitteln**
Packaging material with an anti-adhesion agent and its application in packaging for foodstuffs
Matériau d'emballage doté d'un moyen anti-adhésif et son utilisation pour l'emballage d'aliments

(30) Priorität: 13.01.2006 DE 102006001752
(43) Veröffentlichungstag der Anmeldung: 18.07.2007
(73) Patentinhaber: Wipak Walsrode GmbH & Co. KG, 29699 Bomlitz (DE)
(72) Erfinder: Sperlich, Bernd, Dr., 29664 Walsrode (DE); Schwarz, Willi, 29699 Bomlitz (DE); Wunderlich, Hans, Dr., 29699 Bomlitz (DE)
(74) Vertreter: Kröncke, Rolf

(56) Entgegenhaltungen:
- EP-A- 0 210 750
- EP-A- 1 362 792
- DE-A1- 1 494 382
- DE-A1- 2 524 867

## Beschreibung

Die Erfindung betrifft ein Verpackungsmaterial aus thermoplastischem Polymer in Form von Folien, Bahnen, Platten, Mulden oder sonstigen Konfektionsformen, insbesondere für die Verpackung von Lebensmitteln sowie zugehörige Verpackungen und die Verwendung von Fettsäureestern als Antihaftmittel in derartigen Verpackungen und Materialien.

Kunststofffolien und -verpackungen stehen sehr häufig mit Lebensmitteln in direktem Kontakt. Manche Lebensmittel, insbesondere fetthaltige und pastöse Lebensmittel, neigen zum Ankleben an der Verpackungsoberfläche. Dieser Effekt verstärkt sich, wenn das Lebensmittel heiß und flüssig in die Verpackung eingefüllt wurde. Das Lebensmittel kann dann nur schwierig der Verpackung entnommen werden. Es wäre deshalb wünschenswert, das Ankleben an der Verpackung vermeiden zu können.

Aus der EP 1 362 792 ist es bereits bekannt, Kunststoff-Lebensmittelverpackungen so auszurüsten, dass das Anhaften von Käse, Schmelzkäse, Erdnussbutter, Käsecreme, Dressings, Gelatine- und Milchprodukten möglichst weitgehend unterbunden wird. Hierzu wird dem Kunststoff, d.h. zumindest den die innere Behälteroberfläche bildenden Kunststoffzusammensetzungen, Glycerinmonostearat (auch bezeichnet als: Glycerolmonostearat) in einer Menge von wenigstens 4000 ppm zugesetzt. Das Additiv soll die Haftung zum Lebensmittel - insbesondere Käse und Schmelzkäse - verringern (Antihaftmittel).

Es hat sich jedoch gezeigt, dass das Additiv Glycerinmonostearat aus dem Kunststoff herausgelöst werden kann. Das Glycerinmonostearat migriert mit der Zeit (bei Lagerung), wie dies auch für andere Additive, u.a. für Weichmacher bekannt ist, aus der Verpackung heraus in das Verpackungsgut, z.B. ein Lebensmittel hinein.

Durch das Auswandern des GMS geht die gewünschte Wirkung verloren, da die Verpackungsoberfläche an Additiv verarmt. Länger gelagerte Ware wird aus diesem Grund wieder vermehrt an der Verpackung anhaften.

Das Glycerinmonostearat ist ein Monoester des Glycerins mit der Stearinsäure, einer unverzweigten C18-Fettsäure. Die Substanz wird als Emulgator in der Lebensmittelindustrie verwendet, unter anderem für fetthaltige Teigmassen, Eiscreme, Kartoffelinstantprodukte und dergleichen, und ist als E 471 zu deklarieren. Trotz dieser Zulassung, ist es selbstverständlich nicht erwünscht, dass Kunststoffadditive im Verpackungsgut nachgewiesen werden können.

Der Erfindung liegt daher die Aufgabe zugrunde, das Anhaften fetthaltiger und speziell pastöser Lebensmittelprodukte an in Kontakt mit diesen stehenden Kunststoffverpackungen aus thermoplastischen Polymeren möglichst effektiv und dauerhaft zu unterbinden.

Zur Lösung dieser Aufgabe wird ein Verpackungsmaterial gemäß Anspruch 1 vorgesehen.

Der Fettsäureester dient als Antihaftmittel, so dass die Aufgabe ebenfalls gelöst wird durch die Verwendung eines Fettsäureesters eines mehrwertigen Alkohols, nämlich eines Mono-, Di- oder Triesters eines Di- oder Triols, wobei die Fettsäurereste ausgewählt sind aus der Gruppe Arachinat (C20), Behenat (C22), Lignocerinat (C24) und Ceretinat (C26), als Antihaftmittel in einem Verpackungsmaterial aus thermoplastischem Polymer.

Überraschenderweise konnte festgestellt werden, dass bereits eine geringe Erhöhung der Kettenlänge im Fettsäurerest des Esteradditivs zu einer sprunghaften absoluten Verbesserung der Haftverminderung führt. Dies konnte experimentell belegt werden.

Durch Einsatz von Polyolestern mit längerer Kettenlänge der Fettsäurekomponente kann der oben beschriebene negative Lagerungseffekt vermieden werden. Überraschenderweise wird die Haftung des Lebensmittels, bzw. des fettigen oder pastösen Verpackungsguts, an der Verpackung mit der Lagerungszeit sogar geringer. Die Ursache für diesen Effekt ist noch nicht geklärt. Weiter wurde gefunden, dass bei Estern mit längerkettigen Fettsäureresten (ab C19) eine geringere Additivmenge benötigt wird.

Das Additiv, das die Anhaftung der verpackten Lebensmittel an die Verpackung unterbinden soll (Antihaftmittel), ist erfindungsgemäß ein Fettsäureester eines mehrwertigen Alkohols, nämlich ein Mono-, Di- oder Triester eines Di- oder Triols. Bevorzugt ist die Verwendung der Monoester, insbesondere des Glycerins oder des Glykols. Die Fettsäurereste sind: Arachinat (C20), Behenat (C22), Lignocerinat (C24) und Cerotinat (C26). Derzeit besonders bevorzugt ist Glycerinmonobehenat.

Die wirksame Menge, in der der Fettsäureester für die gewünschte Wirkung einzusetzen ist, kann experimentell bestimmt werden. Aus den bisherigen Experimenten konnte geschlossen werden, dass bereits Konzentrationen größergleich 200 ppm Wirkung entfalten. Für eine sichere Wirkung auch bei stärker an der Verpackung anhaftenden Lebensmitteln sind Konzentrationen größergleich 500 ppm oder bevorzugt größergleich 800 ppm zu empfehlen.

Sofern die Verpackung aus einem einheitlichen Material besteht, was zum Beispiel bei einfachen Kunststoffbehältern oder einschichtigen Folien der Fall sein kann, kann der Fettsäureester homogen in dem Verpackungsmaterial verteilt sein. Es ist jedoch auch möglich, das Additiv nur in für die Entfaltung der Wirkung ausgewählte Schichten der Verpackung einzubringen. Diese Schichten können solche sein, die mit dem Verpackungsgut in Kontakt kommen oder auch unmittelbar unter verpackungsgutseitigen Oberflächen liegen.

Wenn die übrigen Teile der Verpackung bzw. des Verpackungsmaterials den Ester nicht enthalten, sondern nur für die Entfaltung der Wirkung ausgewählte Schichten, kann das Additiv relativ ökonomischer verwendet werden. Auch ist es dann möglich, für bestimmte andere Schichten oder Verpackungsbereiche Standardzusammensetzungen zu verwenden, die keinen Fettsäureester enthalten.

Das Verpackungsmaterial ist eine Mehrschichtfolie aus thermoplastischen Polymeren, wie sie beispielsweise für den Käsescheibeneinzeleinschlag verwendet wird. Das Verpackungsmaterial kann auch als ein steiferes Material ausgebildet sein, wie es zur Herstellung von Mulden oder beliebigen anderen Behältern dient. Die Schichten der Folie bestehen aus Polyolefinen, insbesondere Polyethylen oder Polypropylen, Polyestern, Polystyrol, Polyamid, Copolymerisaten mit oder zwischen den vorgenannten Stoffen oder Mischungen dieser Polymere . Geeignete Verpackungsmaterialien, einschließlich Folien und Mehrschichtfolien, die mit dem erfindungsgemäßen Fettsäureester-Additiv zur Haftungsverringerung modifiziert werden können, sind dem Fachmann grundsätzlich bekannt.

In einer Ausführungsform kann der Fettsäureester in wenigstens einer äußeren Schicht einer Mehrschichtfolie enthalten sein. In der Regel wird der Einsatz des Esters in einer Außenschicht ausreichend sein. Diese Außenschicht wird dann beim Verpackungsvorgang dem Füllgut zugewendet. Die äußere Schicht, in der das Fettsäureester-Additiv enthalten ist, kann eine Siegelschicht sein. Um eine beidseitige Verwendung der Folie zu ermöglichen, oder für Folien, die als Trennblätter zwischen Lebensmitteln dienen sollen, kann der Fettsäureester auch in beiden Außenschichten der Folie vorliegen, jeweils in der gewünschten Konzentration.

In einer weiteren Ausführungsform kann der Fettsäureester in einer Schicht unterhalb einer oder mehrerer Deckschichten von nicht mehr als insgesamt 20 µm Dicke angeordnet sein. Die Deckschicht kann z.B. eine Siegelschicht oder eine mehrschichtige Siegelsperrschicht sein.

Die das Fettsäureester-Additiv enthaltende Schicht ist eine Polyethylen- Polypropylen-, Polyester- oder Polyamid-Schicht.

In bevorzugter Ausführung ist die Folie eine gereckte oder teilgereckte Folie, d.h. eine mono- oder biaxial orientierte Folie, beispielsweise eine BOPP-, BOPE- oder BOPET-Folie.

Für die steiferen Materialien zur Herstellung von Mulden oder Behältern kommen die gleichen Grundmaterialien zum Einsatz, d.h. vorrangig Polyolefine, insbesondere Polyethylen oder Polypropylen, Polyester, Polystyrol, Polyamid, Copolymerisate mit oder zwischen den vorgenannten Stoffen oder Mischungen dieser Polymere. Auch hier kann der Fettsäureester bevorzugt in eine dem Verpackungsgut zugewandte Deckschicht eingebracht sein.

Wenn das Additiv nur bereichsweise oder in eine für die Entfaltung der Wirkung ausgewählte Schicht des Verpackungsmaterials bzw. der Verpackung (z. B. eine Deckschicht oder eine unter einer Deckschicht liegende Zwischenschicht) eingebracht wird, ist eine besonders große Materialersparnis für das Fettsäure-Additiv möglich, da nicht tragende Schichten zum Teil schon ab Schichtdicken von 0,1 oder 0,2 µm auf- oder eingebracht werden können. Dieser Vorteil kommt bei der Erfindung besonders deshalb zum Tragen, weil das Fettsäure-Additiv nach dieser Erfindung - soweit bislang gemessen werden konnte - auch in geringer Konzentration dauerhaft wirksam ist, vermutlich, da es nicht oder kaum in das Füllgut auswandert. Es wird daher genügen, das Antihaftmittel nach der Erfindung in eine dünne Schicht einer Mehrschichtfolie von ca. 0,1 bis 5 µm einzubringen.

Die Erfindung sieht die Verwendung des beschriebenen Verpackungsmaterials für die Verpackung von Lebensmitteln aller Art vor, da durch die längeren Fettsäurereste überraschender Weise eine Migration des Fettsäureester-Additivs aus der Verpackung in das Lebensmittel weitgehend verhindert wird, was einen deutlichen Vorteil gegenüber dem Stand der Technik darstellt.

Die Erfindung umfasst auch Lebensmittelverpackungen, die ein Verpackungsmaterial wie oben im Detail beschrieben nur enthält. Zusätzliche Verpackungselemente, z. B. aus Papier oder Pappe, Metallclips oder dergleichen können vorhanden sein. Die Verpackung kann mit einem oder mehreren Lebensmitteln befüllt sein.

Die Verpackung besitzt vorzugsweise die Form eines Beutels, weiter vorzugsweise eines Schlauchbeutels, es kann sich aber auch um eine Muldenverpackung, einen beliebigen Kunststoffbehälter oder eine Flasche handeln.

Sofern die Verpackungen aus den thermoplastischen Polymeren im Spritzguss oder durch Extrusion hergestellt werden, kann der Fettsäureester dem Polymergranulat direkt oder in Form eines Masterbatches zugemischt werden, wie allgemein üblich. Je nach Verpackungsform kann es auch möglich sein, die Verpackung auf der dem Verpackungsgut, d.h. dem Lebensmittel zugewandten Seite mit einer oder mehreren Polymerlagen zu beschichten, von denen wenigstens eine das erfindungsgemäße Additiv bzw. Antihaftmittel enthält.

### Beispiele zur Wirkung des Fettsäureester-Additivs

Um die Wirkung des Fettsäureester-Additivs zu untersuchen wurden folgende Folien verwendet:
- Folie A:: Polypropylenfolie (20 µm) mit 3000 ppm Glycerinmonostearat (C18) **- Vergleichsbeispiel**
- Folie B:: Polypropylenfolie (20 µm) mit 3000 ppm Glycerinmonobehenat (C22)
- Folie C:: Polypropylenfolie (20 µm) mit 1000 ppm Glycerinmonobehenat (C22)

mit den oben angegebenen Folien wurde ein Käsescheibeneinzeleinschlag von Schmelzkäsescheiben vorgenommen. Entsprechende Ergebnisse findet man bei geschnittenem Butterkäse. Die Untersuchungsergebnisse für den Schmelzkäseeinschlag sind in der nachfolgenden Tabelle zusammengefasst:

| Folie | Haftung des Käses direkt nach Verpacken | nach 1 Tag (30 °C) | nach 3 Tagen (30 °C) | nach 5 Tagen (30 °C) |
|---|---|---|---|---|
| A | keine | mittel | stark | stark |
| B | keine | keine | keine | keine |
| C | mittel | mittel | keine | keine |

- keine Haftung:: Beim Abziehen der Käsescheibe von der Folie bleibt kein Käse auf der Folie zurück
- mittlere Haftung: Beim Abziehen der Käsescheibe von der Folie bleibt etwas Käse auf der Folie zurück
- starke Haftung:: die Käsescheibe lässt sich nicht in einem Stück von der Folie ablösen

Erstaunlich ist, dass sich bei dem Ester mit nur wenig längerkettigem Fettsäurerest die Haftung zwischen Folie und Käse bei Lagerung bereits verringert.

Über mehrere Monate Lagerzeit konnte keine Verschlechterung der Ablöseeigenschaften der Käsescheibe von der Folie beobachtet werden. Dies bedeutet eine sprunghafte Verbesserung gegenüber dem Stand der Technik.

## Patentansprüche

1. Verpackungsmaterial für Lebensmittel in Form einer Mehrschichtfolie, bei der die Schichten aus Polyolefin, insbesondere Polyethylen oder Polypropylen, Polyestern, Polystyrol, Polyamid, Copolymerisaten mit oder zwischen den vorgenannten Stoffen oder Mischungen dieser Polymere bestehen, **dadurch gekennzeichnet, dass** in wenigstens einer äußeren Schicht oder in einer Schicht der Mehrschichtfolie unterhalb einer oder mehrerer Deckschichten von nicht mehr als insgesamt 20 µm Dicke ein Fettsäureester enthalten ist, dass die den Fettsäureester enthaltende Schicht eine Schicht aus Polyethylen, Polypropylen, Polyester oder Polyamid ist und dass der Fettsäureester ein Ester eines mehrwertigen Alkohols, nämlich ein Mono-, Di- oder Triester eines Di- oder Triols ist, wobei die Fettsäurereste ausgewählt sind aus der Gruppe Arachinat (C20), Behenat (C22), Lignocinerat (C24) und Cerotinat (C26).

2. Verpackungsmaterial nach Anspruch 1, **dadurch gekennzeichnet, dass** der Fettsäurester Glycerinmonobehenat ist.

3. Verpackungsmaterial nach 1 oder 2, **dadurch gekennzeichnet, dass** der Fettsäurester in einer Schicht des Verpackungsmaterials in einer Konzentration größergleich 200 ppm, weiter vorzugsweise größergleich 500 ppm, weiter vorzugsweise größergleich 800 ppm vorhanden ist.

4. Verpackungsmaterial nach einem der Ansprüche 1 bis 3, **dadurch gekennzeichnet, dass** die Folie eine gereckte oder teilgereckte Folie ist.

5. Verwendung des Verpackungsmaterials nach einem der Ansprüche 1 bis 4 für die Verpackung von fetthaltigen und/oder Kunststoffoberflächen leicht anhaftenden Lebensmitteln.

6. Verwendung eines Fettsäureesters eines mehrwertigen Alkohols, nämlich eines Mono-, Di- oder Triesters eines Di- oder Triols, wobei die Fettsäurereste ausgewählt sind aus der Gruppe Arachinat (C20), Behenat (C22), Lignocinerat (C24) und Cerontinat (C26), als Antihaftmittel in einem Verpackungsmaterial aus thermoplastischem Polymer.

7. Verwendung nach Anspruch 6, **dadurch gekennzeichnet, dass** der Fettsäureester Glycerinmonobehenat ist.

8. Verwendung nach Anspruch 6 oder 7, **dadurch gekennzeichnet, dass** der Fettsäureester in dem Verpackungsmaterial oder in einer Schicht des Verpackungsmaterials in Form einer Mehrschichtfolie in wirksamer Menge und vorzugsweise in einer Konzentration größergleich 200 ppm, weiter vorzugsweise größergleich 500 ppm, weiter vorzugsweise größergleich 800 ppm vorhanden ist.

9. Lebensmittelverpackung, die ein Verpackungsmaterial nach einem der Ansprüche 1 bis 4 enthält oder aus diesem besteht.

10. Verpackung nach Anspruch 9, **dadurch gekennzeichnet, dass** sie die Form eines Beutels, insbesondere eines Schlauchbeutels, einer Muldenverpackung oder einer Flasche besitzt.

11. Verpackung nach Anspruch 9 oder 10, **dadurch gekennzeichnet, dass** der Fettsäureester wenigstens in einer zum Verpackungsgut weisenden äußeren Schicht oder Lage der Verpackung enthalten ist.

12. Verpackung nach einem der Ansprüche 9 bis 11, **dadurch gekennzeichnet, dass** sie ein Lebensmittel, insbesondere ein fetthaltiges und/oder an Kunststoffoberflächen leicht anhaftendes Lebensmittel enthält.

## Claims

1. Packaging material for food, which packaging material is in the form of a multilayer film in which the layers are of polyolefin, in particular polyethylene or polypropylene, polyesters, polystyrene, polyamide, copolymers with or among the abovementioned substances or mixtures of these polymers, **characterized in that** a fatty acid ester is present in at least one outer layer or in a layer of the multilayer film beneath one or more covering layers of no more than in total 20 µm thickness, **in that** the layer containing the fatty acid ester is a layer of polyethylene, polypropylene, polyester or polyamide, and **in that** the fatty acid ester is an ester of a polyhydric alcohol, namely a mono-, di- or triester of a dior triol, wherein the fatty acid esters are selected from the group arachinate (C20), behenate (C22), lignocerate (C24) and cerotinate (C26).

2. Packaging material according to Claim 1, **characterized in that** the fatty acid ester is glycerol monobehenate.

3. Packaging material according to Claim 1 or 2, **characterized in that** the fatty acid ester is present in a layer of the packaging material at a concentration greater than or equal to 200 ppm, more preferably greater than or equal to 500 ppm, more preferably greater than or equal to 800 ppm.

4. Packaging material according to any one of Claims 1 to 3, **characterized in that** the film is a stretched or partially stretched film.

5. Use of the packaging material according to any one of Claims 1 to 4 for packaging fatty foods and/or foods readily adhering to plastics surfaces.

6. Use of a fatty acid ester of a polyhydric alcohol, namely a mono-, di- or triester of a di- or triol, wherein the fatty acid residues are selected from the group arachinate (C20), behenate (C22), lignocerate (C24) and cerotinate (C26), as non-stick agent in a packaging material made of thermoplastic polymer.

7. Use according to Claim 6, **characterized in that** the fatty acid ester is glycerol monobehenate.

8. Use according to Claim 6 or 7, **characterized in that** the fatty acid ester is present in the packaging material or in one layer of the packaging material, which is in the form of a multilayer film, in an active amount and preferably at a concentration greater than or equal to 200 ppm, further preferably greater than or equal to 500 ppm, further preferably greater than or equal to 800 ppm.

9. Food packaging which contains a packaging material according to any one of Claims 1 to 4 or consists thereof.

10. Packaging according to Claim 9, **characterized in that** it has the form of a pouch, in particular a tubular pouch, a packaging tray or a bottle.

11. Packaging according to Claim 9 or 10, **characterized in that** the fatty acid ester is present at least in one outer layer or sheet of the packaging turned towards the packaged material.

12. Packaging according to any one of Claims 9 to 11, **characterized in that** it contains a food, in particular a fatty food and/or a food readily adhering to plastics surfaces.

## Revendications

1. Matériau d'emballage pour produits alimentaires sous forme d'une feuille à plusieurs couches, dans laquelle les couches sont constituées par une polyoléfine, en particulier du polyéthylène ou du polypropylène, des polyesters, du polystyrène, du polyamide, des copolymères avec ou entre les substances susmentionnées ou des mélanges de ces polymères, **caractérisé en ce que** dans au moins une couche extérieure ou dans une couche de la feuille à plusieurs couches, sous une ou plusieurs couches de recouvrement d'une épaisseur qui n'est au total pas supérieure à 20 µm, est contenu un ester d'acide gras, **en ce que** la couche contenant l'ester d'acide gras est une couche en polyéthylène, en polypropylène, en polyester ou en polyamide et **en ce que** l'ester d'acide gras est un ester d'un alcool polyvalent, à savoir un monoester, un diester ou un triester d'un diol ou d'un triol, les esters d'acide gras étant choisis dans le groupe formé par l'arachinate (C20), le béhénate (C22), le lignocinérate (C24) et le cérotinate (C26).

2. Matériau d'emballage selon la revendication 1, **caractérisé en ce que** l'ester d'acide gras est le monobéhénate de glycérol.

3. Matériau d'emballage selon la revendication 1 ou 2, **caractérisé en ce que** l'ester d'acide gras est présent dans une couche du matériau d'emballage en une concentration égale ou supérieure à 200 ppm, plus préférablement égale ou supérieure à 500 ppm, encore plus préférablement égale ou supérieure à 800 ppm.

4. Matériau d'emballage selon l'une quelconque des revendications 1 à 3, **caractérisé en ce que** la feuille est une feuille étirée ou partiellement étirée.

5. Utilisation du matériau d'emballage selon l'une quelconque des revendications 1 à 4 pour l'emballage de produits alimentaires gras et/ou collant facilement aux surfaces en matériau synthétique.

6. Utilisation d'un ester d'acide gras d'un alcool polyvalent, à savoir d'un monoester, d'un diester ou d'un triester d'un diol ou d'un triol, les restes d'acide gras étant choisis dans le groupe formé par l'arachinate (C20), le béhénate (C22), le lignocinérate (C24) et le cérotinate (C26), comme agents antiadhésifs dans un matériau d'emballage en polymère thermoplastique.

7. Utilisation selon la revendication 6, **caractérisée en ce que** l'ester d'acide gras est le monobéhénate de glycérol.

8. Utilisation selon la revendication 6 ou 7, **caractérisée en ce que** l'ester d'acide gras est présent dans le matériau d'emballage ou dans une couche du matériau d'emballage sous forme d'une feuilee à plusieurs couches en une quantité active et de préférence en une concentration égale ou supérieure à 200 ppm, plus préférablement égale ou supérieure à 500 ppm, encore plus préférablement égale ou supérieure à 800 ppm.

9. Emballage pour produits alimentaires, qui contient un matériau d'emballage selon l'une quelconque des revendications 1 à 4 ou qui est constitué par celui-ci.

10. Emballage selon la revendication 9, **caractérisé en ce qu'**il présente la forme d'un sachet, en particulier d'un sachet tubulaire d'un emballage avec un creux ou d'une bouteille.

11. Emballage selon la revendication 9 ou 10, **caractérisé en ce que** l'ester d'acide gras est contenu au moins dans une couche ou épaisseur extérieure de l'emballage orientée vers le produit emballé.

12. Emballage selon l'une quelconque des revendications 9 à 11, **caractérisé en ce qu'**il contient un produit alimentaire, en particulier un produit alimentaire gras et/ou adhérant facilement aux surfaces en matériau synthétique.
